# EUROPEAN PATENT SPECIFICATION

(11) **EP 4 171 124 B1**
(45) Date of publication and mention of the grant of the patent: **01.07.2026**
(21) Application number: 22202945.6
(22) Date of filing: 21.10.2022
(51) Int. Cl.: H04W 36/00, H04W 88/04

(54) **PATH SWITCH WITH SERVICE CONTINUITY IN A LAYER-2 UE-TO-NETWORK RELAY**
PFADSCHALTER MIT DIENSTKONTINUITÄT IN EINEM LAYER-2-UE-TO-NETWORK-RELAIS
COMMUTATEUR DE CHEMIN AVEC CONTINUITÉ DE SERVICE DANS UN RELAIS UE-RÉSEAU DE COUCHE 2

(30) Priority: 22.10.2021 WO PCT/CN2021/125682; 13.10.2022 CN 202211257989
(43) Date of publication of application: 26.04.2023
(73) Proprietor: MediaTek Singapore Pte. Ltd., Singapore 138628 (SG)
(72) Inventor: TENNY, Nathan Edward, San Jose (US); WANG, Xuelong, Beijing (CN)
(74) Representative: Hoefer & Partner Patentanwälte mbB

(56) References cited:
- EP-A1- 3 829 220
- EP-A1- 4 080 938
- EP-A1- 4 106 399
- WO-A1-2020/223629
- WO-A1-2021/159823
- WO-A1-2021/190442
- MEDIATEK INC: "Introduction of Rel-17 Sidelink Relay", vol. RAN WG2, no. Electronic; 20210816 - 20210827, 19 October 2021 (2021-10-19), XP052061657, Retrieved from the Internet <URL:https://ftp.3gpp.org/tsg_ran/WG2_RL2/TSGR2_116-e/Docs/R2-2109543.zip R2-2108924 Endorsed Stage 2 Running CR on Introduction of R17 SL Relay.docx> [retrieved on 20211019]

## Description

### TECHNICAL FIELD

The disclosed embodiments relate generally to wireless network communications, and, more particularly, to path switch in a layer 2 UE-to-Network relay in 5G new radio (NR) wireless communications systems.

### BACKGROUND

In a UE-to-network relaying environment, a so-called "remote UE" receives service from a cellular network via an intermediary "relay UE", using a sidelink interface (for example, a PC5 interface in 3GPP systems) for communication between the remote UE and the relay UE. The protocol stacks between the two UEs and the network may be structured in various ways. If a "layer 2" relay architecture is considered, then the relaying relationship is mediated by an adaptation layer that functions as a sublayer of layer 2 of a protocol stack, e.g., located between the RLC and PDCP layers.

A UE may operate in direct communication with a network node such as a base station (gNodeB or gNB) while in coverage, referred to as a "direct path" service. Alternatively, a UE may function as a remote UE in a UE-to-network relaying relationship, obtaining service from the network via communicating directly with a relay UE, which then communicates directly with a gNB, referred to as an "indirect path" service. A remote UE may be in or out of network coverage. When the remote UE is in network coverage, it may experience poor link conditions that degrade its service quality on the direct path, and therefore it may prefer to operate on an indirect path through a relay UE. In a "single-hop" relaying environment, where only one relay UE is permitted to operate between a remote UE and the cellular network, the relay UE is in network coverage by definition. However, in a "multi-hop" relaying environment, where one relay UE may communicate with another relay UE rather than directly with the network, some relay UEs may also be out of network coverage. A setting where at least one of the involved UEs (for instance, a remote UE) is out of coverage, while at least one of the involved UEs (for instance, a relay UE) is in coverage, may be referred to as a partial-coverage scenario.

Due to various events such as physical mobility and/or changing radio conditions, a remote UE may initially be served by a first relay UE, and later find that a second relay UE can offer better service. In such a situation, it is advantageous for the remote UE to be able to perform a path switch operation, in which it relocates its service to use the second relay UE instead of the first relay UE. It is naturally preferable for the path switch operation to offer service continuity, i.e., to operate in such a manner that the user service is not interrupted as a result of the path switch.

In a layer 2 UE-to-network relaying environment, it is advantageous for the remote UE to be able to switch its service from operating through a first relay UE to operating through a second relay UE, a process which may be referred to as an indirect-to-indirect path switch. Furthermore, the path switch operation should allow continuity of user services.

Document EP 3 829 220 A1 discloses a base station that is configured to perform operations related to link management for a remote UE.

Documents WO 2021/190442 A1 and EP 4 080 938 A1 disclose a switching method and device in a side-link relay architecture.

Documents WO 2021/159823 A1 and EP 4 106 399 A1 disclose a link switching method and apparatus, a link switching configuration method and apparatus, a communication node, and a medium.

3GPP document R2-2109543 discloses a paging delivery approach.

Document WO 2020/223629 A1 discloses a method of multi-hop relay chain formation in a wireless communication network.

### SUMMARY

An indirect-to-indirect path switching procedure is proposed for transferring operation of a remote user equipment (UE) from a first relay UE to a second relay UE, while preserving continuity of the user's service(s) offered by a cellular network through the first and second relay UEs, in a layer 2 UE-to-network relaying architecture. Methods according to the invention are defined by the independent claims 1 and 6. A UE according to the invention is defined by claim 12.

Other embodiments and advantages are described in the detailed description below. This summary does not purport to define the invention. The invention is defined by the claims.

### BRIEF DESCRIPTION OF THE DRAWINGS

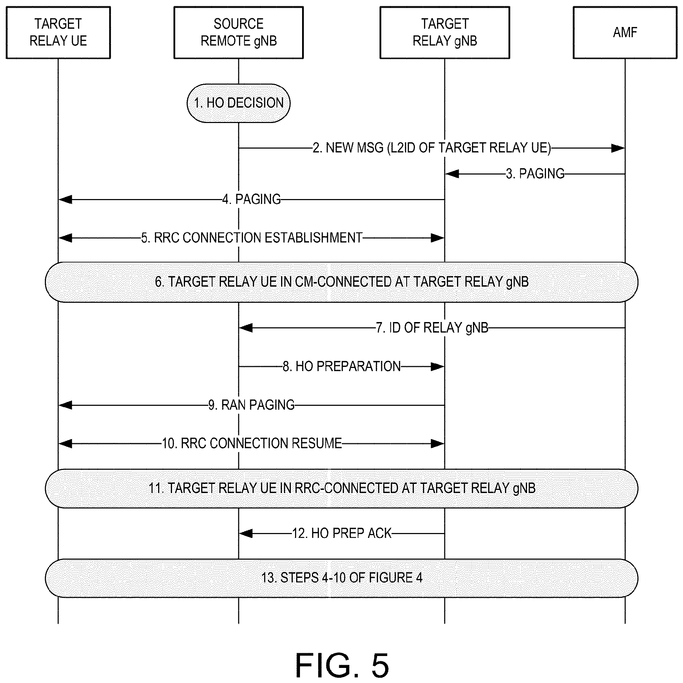

In the following, each of the aspects, the embodiments and examples described below is, irrespective of how it is denoted, an embodiment of the present invention when it relates to inter-gNB indirect-to-indirect path switch operation or to one of the figures 5 to 7, and is useful to understand the present invention, otherwise.
Figure 1 illustrates a wireless cellular communications system supporting an indirect-to-indirect path switch for a remote user equipment (UE) with service continuity in a layer 2 UE-to-Network relay in accordance with a novel aspect.
Figure 2 is a simplified block diagram of a wireless transmitting device and a receiving device in accordance with embodiments of the current invention.
Figure 3 illustrates user plane protocol stacks for a layer 2 relaying architecture for UE-to-network relay in accordance with one novel aspect.
Figure 4 illustrates a simplified sequence flow of an intra-gNB indirect-to-indirect path switch operation in accordance with one novel aspect.
Figure 5 illustrates a sequence flow of an inter-gNB indirect-to-indirect path switch operation for all RRC states in accordance with one novel aspect.
Figure 6 illustrates a sequence flow of an inter-gNB indirect-to-indirect path switch operation with redirection of handover to a new cell after the target relay UE resumes.
Figure 7 illustrates a sequence flow of an inter-gNB indirect-to-indirect path switch operation with user-plane data handling in accordance with one novel aspect.
Figure 8 is a flow chart of a method of indirect-to-indirect path switch from a remote UE perspective in accordance with one novel aspect.
Figure 9 is a flow chart of a method of indirect-to-indirect path switch from a source gNB perspective in accordance with one novel aspect.

### DETAILED DESCRIPTION

Reference will now be made in detail to some embodiments of the invention, examples of which are illustrated in the accompanying drawings.

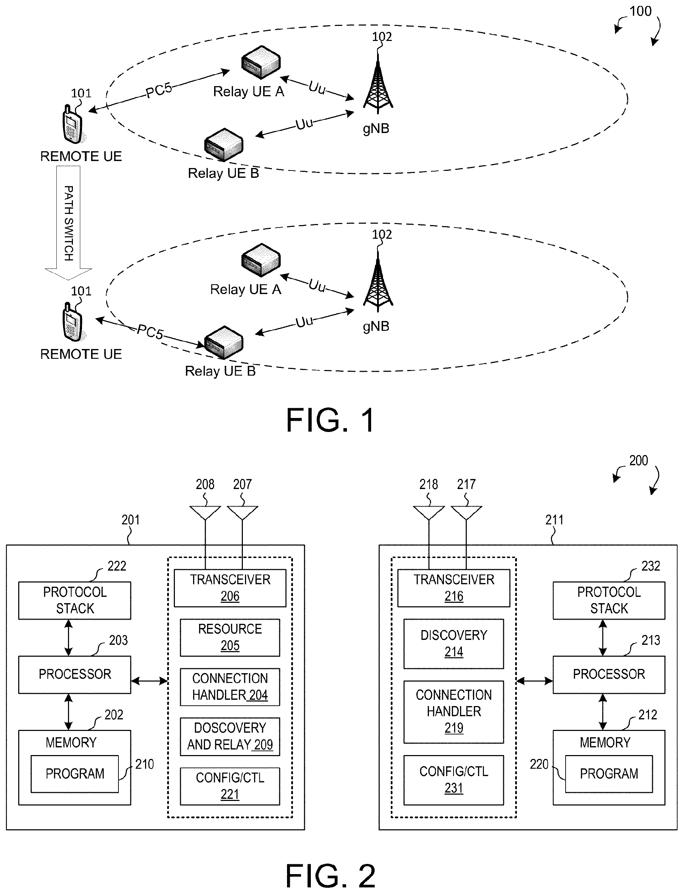

Figure 1 illustrates a wireless cellular communications system 100 supporting an indirect-to-indirect path switch with service continuity in a layer 2 UE-to-Network relay in accordance with a novel aspect. In a UE-to-network relaying architecture, when a remote UE 101 receives service through a first relay UE A, a variety of events may cause the remote UE to need to switch to a second relay UE B. For example, the first relay UE A may move out of range of the remote UE (or vice versa), the first relay UE A may cease offering relaying service, or the second relay UE B may simply be able to offer better service due to better radio conditions along the indirect path comprising the remote UE 101, the second relay UE B, and a serving network node such as a gNB 102. Accordingly, it is beneficial for a procedure to be available for switching the remote UE's service from the first relay UE A to the second relay UE B, without creating a service interruption for the user.

Such indirect-to-indirect path switch may be construed as a form of handover, in which the source and target are relay UEs, rather than cells/gNBs as in a conventional handover operation. Thus, for instance, the remote UE may be provided with a reconfiguration instruction, such as an RRCReconfiguration message of a radio resource control (RRC) protocol, that defines a configuration for the remote UE to operate with the target relay UE. The reconfiguration instruction may be sent by a serving network node and delivered to the remote UE via the source relay UE.

In the example of Figure 1, remote UE 101 switches its service path from relay UE A to relay UE B. Like a conventional handover, an indirect-to-indirect path switch may be controlled by the network node (for instance, gNB 102) that initially serves the remote UE 101. In Figure 1, the two relay UEs are shown as served by the same gNB 102 (intra-gNB case). However, it could also be considered for a remote UE to switch from a first relay UE served by a first gNB to a second relay UE served by a second gNB (inter-gNB case, not shown).

In principle the gNB may trigger the path switch at any time, but under typical circumstances the gNB may be expected to trigger a path switch in response to receiving one or more measurements from the remote UE, with the measurements indicating that the target relay UE can be expected to offer better service than the source relay UE. For example, a measurement report may be triggered based on an event defined by "Candidate relay UE signal strength exceeds serving relay UE signal strength by a threshold", an event defined by "Serving relay UE signal strength is below a threshold", an event defined by "Candidate relay UE signal strength is above a threshold", an event defined by "Serving relay UE signal strength is below a first threshold and candidate relay UE signal strength is above a second threshold", and so on. The signal strength referred to in the event definitions may be a measure of signal strength on a sidelink interface, also known as a PC5 interface. The "serving" relay UE is synonymous with the source relay UE, and the "candidate" relay UE is synonymous with the target relay UE.

Figure 2 is a simplified block diagram of wireless devices 201 and 211 in accordance with a novel aspect. For wireless device 201 (e.g., a relay UE), antennae 207 and 208 transmit and receive radio signals. RF transceiver module 206, coupled with the antennae, receives RF signals from the antennae, converts them to baseband signals and sends them to processor 203. RF transceiver 206 also converts received baseband signals from the processor, converts them to RF signals, and sends out to antennae 207 and 208. Processor 203 processes the received baseband signals and invokes different functional modules and circuits to perform features in wireless device 201. Memory 202 stores program instructions and data 210 to control the operations of device 201.

Similarly, for wireless device 211 (e.g., a remote UE), antennae 217 and 218 transmit and receive RF signals. RF transceiver module 216, coupled with the antennae, receives RF signals from the antennae, converts them to baseband signals and sends them to processor 213. The RF transceiver 216 also converts received baseband signals from the processor, converts them to RF signals, and sends out to antennae 217 and 218. Processor 213 processes the received baseband signals and invokes different functional modules and circuits to perform features in wireless device 211. Memory 212 stores program instructions and data 220 to control the operations of the wireless device 211.

The wireless devices 201 and 211 also include several functional modules and circuits that can be implemented and configured to perform embodiments of the present invention. In the example of Figure 2, wireless device 201 is a relay UE that includes a protocol stack 222, a resource management circuit 205 for allocating and scheduling sidelink resources, a connection handling circuit 204 for establishing and managing connections, a traffic relay discovery and handling controller 209 for discovering remote UEs and relaying all or part of control signalling and/or data traffic for remote UEs, and a control and configuration circuit 221 for providing control and configuration information. Wireless device 211 is a remote UE that includes a protocol stack 232, a relay discovery circuit 214 for discovering relay UEs, a connection handling circuit 219 for establishing and managing connections, and a configuration and control circuit 231. The different functional modules and circuits can be implemented and configured by software, firmware, hardware, and any combination thereof. The functional modules and circuits, when executed by the processors 203 and 213 (e.g., via executing program codes 210 and 220), allow relay UE 201 and remote UE 211 to perform embodiments of the present invention accordingly.

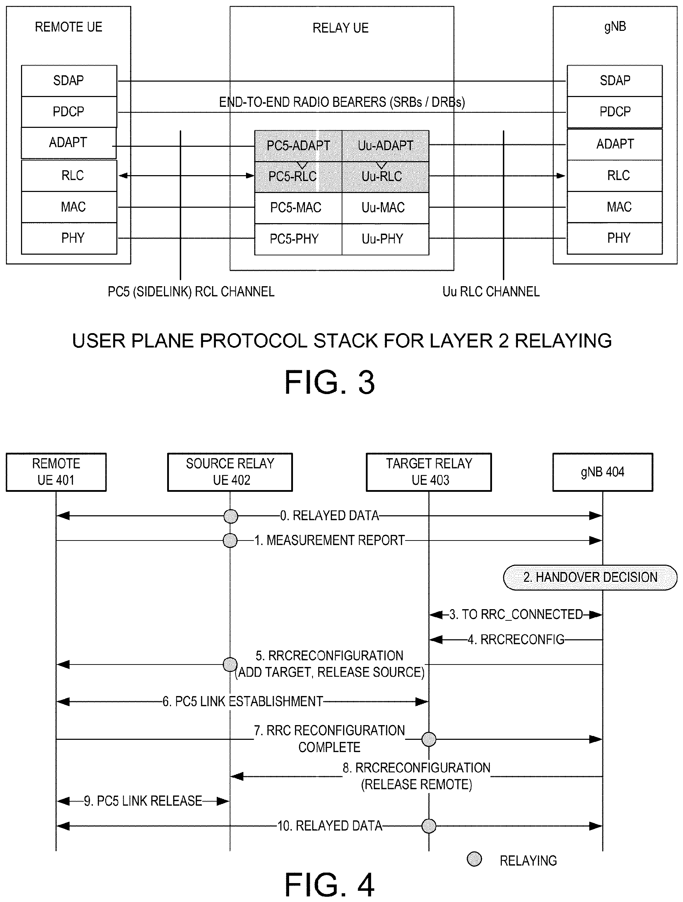

Figure 3 illustrates user plane protocol stacks for a layer 2 relaying architecture for UE-to-network relay in accordance with one novel aspect. If a layer 2 relay architecture is considered, then the relaying relationship is mediated by an adaptation layer that functions as a sublayer of layer 2 of a protocol stack, e.g., located between the RLC and PDCP layers. In Figure 3, the illustrated stack comprises a set of access stratum (AS) protocol layers, including a service data adaptation protocol (SDAP) layer terminated between a remote UE and a gNB, a packet data convergence protocol (PDCP) layer terminated between the remote UE and the gNB, a PC5 adaptation (PC5-ADAPT) layer terminated between the remote UE and a relay UE, a Uu adaptation (Uu-ADAPT) layer terminated between the relay UE and the gNB, and lower layers terminated separately between the remote UE and the relay UE, and between the relay UE and the gNB. The lower layers on each interface as shown in the figure comprise a radio link control (RLC) layer, a medium access control (MAC) layer, and a physical (PHY) layer, over each of a sidelink interface and a Uu interface. One or both of the PC5 and Uu adaptation layers may also be referred to as a sidelink adaptation layer protocol (SALP) layer or as a sidelink adaptation protocol (SLAP) layer, which may also be referred to as a sidelink relay adaptation protocol (SRAP) layer.

A layer 2 UE-to-network relaying architecture is well positioned to offer an "indirect-to-indirect" path switch procedure. In a layer 2 architecture, the upper layers of the protocol stack-for instance, an internet protocol (IP) layer, an SDAP layer, and/or a PDCP layer-terminate between the remote UE and nodes of the network. This means that the state of these upper layers (for example, an IP address of the remote UE) can be maintained even as the remote UE's data path switches between different relay UEs, making service continuity feasible without requiring special behaviour from the upper layers, such as handling mechanisms in the application layer to deal with changing IP addresses.

Figure 4 illustrates a simplified sequence flow of an intra-gNB indirect-to-indirect path switch operation in accordance with one novel aspect. In step 0, data are being relayed between a remote UE 401 and a gNB 404 via a source relay UE 402. In step 1, remote UE 401 sends to gNB 404, via source relay UE 402, a measurement report. The measurement report may indicate radio conditions that make a target relay UE 403 a better candidate for offering service than source relay UE 402, for instance, due to a set of event criteria being met, as described above. The measurement report may comprise one or more sets of measurements of sidelink signal strength and/or sidelink signal quality, corresponding to measurements taken by the remote UE 401 on sidelink communications with the source relay UE 402, the target relay UE 403, or both. The measurement report may additionally comprise cell related measurements.

In step 2, the gNB makes the decision to trigger the path switch operation. This decision may be based on criteria specific to the gNB implementation. In step 3, the gNB brings the target relay UE to a connected state (for instance, an RRC_CONNECTED state of an RRC protocol). It is noted that the source relay UE may already be in a connected state, due to needing a connection with the gNB to transmit the relayed measurement report at step 1, and thus there is no need to bring the source relay UE to a connected state. However, the target relay UE may initially be in any protocol state, including, for example, an RRC_INACTIVE state of an RRC protocol or an RRC_IDLE state of an RRC protocol.

In step 4, the gNB sends a first reconfiguration instruction (for example, an RRCReconfiguration message of an RRC protocol) to the target relay UE, configuring the target relay UE to communicate on a sidelink interface with the remote UE. The first reconfiguration instruction may, for instance, contain configurations for one or more protocol layers for communication on the sidelink interface with the remote UE, such as a PHY layer, a MAC layer, an RLC layer, and/or a SALP or SLAP layer (i.e., PC5-ADAPT layer). The first reconfiguration instruction may also, for instance, contain configurations for one or more protocol layers for communication on a Uu interface between the target relay UE and the gNB, such as a PHY layer, a MAC layer, an RLC layer, and/or a SALP or SLAP layer (i.e., Uu-ADAPT layer).

In step 5, the gNB sends, via the source relay UE, a second reconfiguration instruction (for example, an RRCReconfiguration message of an RRC protocol) to the remote UE, configuring the remote UE to stop communication with the source relay UE and to start communication with the target relay UE. In some embodiments, step 5 may be realised by two separate reconfiguration instructions, such as a first RRCReconfiguration message instructing the remote UE to start communication with the target relay UE and a second RRCReconfiguration message instructing the remote UE to stop communication with the source relay UE. In other embodiments, step 5 may be realised by a single reconfiguration instruction.

In step 6, the remote UE and the target relay UE establish a link on the sidelink interface (for example, a PC5 link on a PC5 interface). It is noted that step 6 may not be necessary, if, for example, the remote UE and the target relay UE are already exchanging sidelink communication for other purposes besides relaying. However, even in such a case, the remote UE and the target relay UE may still opt to establish a separate link for the purpose of relaying. The details of step 6 may follow procedures in the existing art for the establishment of a PC5 link, including, for example, the exchange of a sequence of messages of a PC5 signalling (PC5-S) protocol to establish the link, the transmission of an RRCReconfigurationSidelink message of a PC5 radio resource control (PC5-RRC) protocol to configure the PC5 protocol layers between the remote UE and the target relay UE, and so on.

In step 7, the remote UE transmits, via the target relay UE, a handover complete indication (for example, an RRCReconfigurationComplete message of an RRC protocol) to the gNB. At this point, the "handover" portion of the path switch has completed, and the gNB is aware that the remote UE can be served through the target relay UE. In step 8, the gNB sends to the source relay a third reconfiguration instruction (for example, an RRCReconfiguration message of an RRC protocol), configuring the source relay UE to release its configuration for communication with the remote UE. The third reconfiguration instruction may, for instance, contain release indications for one or more protocol layers on the sidelink interface between the source relay UE and the remote UE. A release indication for a protocol layer may take the form of the absence of a configuration for the protocol layer, an explicit release instruction, and so on.

In step 9, the source relay UE and the remote UE exchange signalling to release their link on the sidelink interface (for example, a PC5 link on a PC5 interface). The details of step 9 may follow procedures in the existing art for the release of a PC5 link, including, for example, the exchange of a sequence of messages of a PC5-S protocol to release the link, the transmission of an RRCReconfigurationSidelink message of a PC5-RRC protocol to release the PC5 protocol layers between the remote UE and the source relay UE, and so on. In step 10, relayed data are transmitted between the remote UE and the gNB via the target relay UE.

It is noted that not all steps of Figure 4 must take place in the order shown. For example, step 10 may take place immediately after step 7, and steps 8 and 9 may be delayed, without substantially affecting the path switch procedure. Furthermore, step 1 may be omitted or replaced by other triggering events if there are other criteria for the gNB to trigger an indirect-to-indirect path switch. For example, a gNB might perform load balancing between the relay UEs that it serves, resulting in reallocation of remote UEs from one relay UE to another even though radio conditions do not require such a reallocation.

Figure 4 only describes the "intra-gNB" case, in which the source and target relay UEs are served by the same gNB. Furthermore, Figure 4 simplifies the state transition in step 3 into a single event, subsuming the details of triggering the state transition for the target relay UE. It is noted that Figure 4 may be applicable in a system where the remote UE is only allowed to switch to a relay UE within the current serving cell. Such a constraint could be enforced at the remote UE side, with a requirement that the remote UE only reports candidate relay UEs that are served by the same cell (or, alternatively, the same gNB, as discussed below). This requirement can be enabled by having the relay UEs indicate their serving cells/gNBs for the benefit of remote UEs that may be measuring them, for example, as part of a discovery signalling message.

Alternatively, the "same cell" (or "same gNB") constraint can be enforced by the network, i.e., the serving gNB may trigger a path switch operation to a particular target relay UE only if the target relay UE has the same serving gNB as the source relay UE. If the relay UE is in RRC_CONNECTED, it is obvious whether it has the same serving gNB, but in RRC_INACTIVE or RRC_IDLE, a candidate relay UE may perform cell reselection to a different cell at any time, and may thus be served by a different gNB, unknown to the remote UE's serving gNB. The necessary information on the relay UE's serving gNB can be made available to the remote UE's serving gNB with specific operating constraints on the system: the relay UE is always maintained in RRC_CONNECTED (and in this case step 3 of Figure 4 is not needed); or the relay UE may be in RRC_CONNECTED or RRC_INACTIVE, but when in RRC_INACTIVE, the relay UE is configured to interact with the network (for example, to perform a RAN notification area update procedure) if it reselects out of the current serving cell; or the relay UE may be in any of RRC_CONNECTED, RRC_INACTIVE, or RRC_IDLE, but when in RRC_INACTIVE or RRC_IDLE, the relay UE is configured to interact with the network if it reselects out of the current serving cell. This interaction may take the form of a RAN notification area update in RRC_INACTIVE, and a tracking area update in RRC_IDLE. Any of these constraints would allow the system to ensure that the relay UE is reachable by the current serving cell.

With respect to the relationship between "same serving cell" and "same serving gNB" criteria, if the serving gNB maintains more than one cell, it can make the stored RRC contexts of the remote and/or relay UEs available to all the cells of the serving gNB. Thus, the intra-gNB flow of Figure 4 can be applied to an inter-cell path switch (that is, a path switch in which the source relay UE is served by a first cell while the target relay UE is served by a second, different cell). Such intra-gNB but inter-cell cases can readily be distinguished by the gNB itself, since the gNB knows which cells it operates. However, if the remote UE is responsible for enforcing an intra-gNB criterion (e.g., if the remote UE is expected to report only relay UEs served by cells of the same gNB that serves the remote UE), then the remote UE may need to be made aware of which cells belong to which gNBs. This information may, for instance, be made available in the form of a serving gNB ID indicated by each relay UE in discovery signalling, allowing the remote UE to know the gNB that serves a candidate relay UE when the remote UE discovers the candidate relay UE. The remote UE would also need to know the gNB ID of the gNB that serves the remote UE itself (via the source relay UE), which could be available from the serving cell's system information, indicated by the source relay UE, and so on.

Figure 5 illustrates a sequence flow of an inter-gNB indirect-to-indirect path switch operation for all RRC states in accordance with one novel aspect. Figure 5 extends upon Figure 4 by addressing the limitation to operation within a single serving gNB, showing salient portions of the inter-gNB indirect-to-indirect path switch procedure for all RRC states. The two gNBs are described in Figure 5 as the "remote gNB" (the gNB initially serving the remote UE, which inherently is also the gNB serving the source relay UE, since the remote UE obtains its network service through the source relay UE), and the "relay gNB" (the gNB serving the target relay UE, which is also the gNB finally serving the remote UE at the end of the procedure, since the remote UE then obtains its network service through the target relay UE).

In step 1 of Figure 5, the remote gNB takes a handover decision, which may be triggered by criteria specific to the remote gNB implementation. In step 2, the remote gNB queries an access and mobility management function (AMF) to determine the identity of the relay gNB, that is, the location of the target relay UE within the network. Step 2 may be necessary because the remote gNB does not maintain knowledge of the location or service status of UEs in the network other than those served by the remote gNB itself, and thus may not be expected to know the location of the target relay UE. The query message in step 2 may be a new message of an NG application protocol (NGAP). It is noted that the query message may rely on non-UE-associated signalling, since the AMF and the remote gNB do not have a signalling association related to the target relay UE. The query message may contain an AS identifier of the target relay UE, such as a layer 2 ID (L2ID). The identifier of the target relay UE may be reported to the remote gNB, for example, in a measurement report sent by the remote UE (not shown in Figure 5). When the AMF receives the query in step 2, it identifies the target relay UE by a core network (CN) identifier such as a 5G S-Temporary Mobile Subscription Identifier (5G-S-TMSI); this implies that the AMF must maintain a mapping of AS identifiers of relay UEs and CN identifiers of relay UEs. The maintenance of this mapping is outside the scope of this invention.

Based on identifying the target relay UE by a CN identifier, the AMF determines the connection management state of the target relay UE. If the target relay UE is in a connected connection management state (for example, a CM-CONNECTED state), steps 3-5 may be skipped. If the target relay UE is in an idle connection management state (for example, a CM-IDLE state), steps 3-5 are needed. In step 3, the AMF sends a paging instruction to the relay gNB, and in step 4, the relay gNB transmits a corresponding paging message over the air (for example, a Paging message of an RRC protocol). In step 5, the target relay UE responds to the page by sending a message to the relay gNB. The message may, for instance, comprise a request to establish an RRC connection. After step 5, the relay gNB may forward a message to the AMF indicating that the target relay UE is available, such as a non-access-stratum (NAS) message sent by the target relay UE in association with step 5 (not shown in the figure).

In step 6, the target relay UE may safely be assumed to be in a CM-CONNECTED state at the relay gNB. In step 7, the AMF sends to the remote gNB an indication of the identity of the relay gNB; this indication may be a new NGAP message. The indication may use non-UE-associated signalling. In step 8, the remote gNB begins a handover procedure for the remote UE by sending a handover preparation message to the relay gNB. The handover preparation message may be a message of an Xn application protocol (XnAP). The relay gNB evaluates the RRC protocol state of the target relay UE. If the target relay UE is in an RRC_CONNECTED state, steps 9 and 10 may be skipped. If the target relay UE is in an RRC_INACTIVE state, steps 9 and 10 are needed. In step 9, the relay gNB transmits a RAN paging message over the air (for example, a Paging message of an RRC protocol, in which the target relay UE is identified by an Inactive Radio Network Temporary Identifier (I-RNTI)). In step 10, the target relay UE responds to the RAN paging message, for instance, by requesting resumption of an RRC connection by the relay gNB. Step 10 may comprise multiple messages of an RRC protocol, such as an RRCResumeRequest message from the target relay UE to the relay gNB, an RRCResume message from the relay gNB to the target relay UE, and an RRCResumeComplete message from the target relay UE to the relay gNB (not shown in the figure). This operation may be in accordance with legacy methods of RRC connection resumption.

In step 11, the target relay UE may safely be assumed to be in an RRC_CONNECTED state at the relay gNB. In step 12, the relay gNB accepts the handover that was previously requested by the remote gNB, by sending a handover preparation acknowledgement to the remote gNB. The handover preparation acknowledgement may be an XnAP message. The handover preparation acknowledgement message may also be referred to as a handover accept message.

In step 13, steps 4-10 of Figure 4 are carried out, with the following differences: The first RRCReconfiguration message (step 4 of Figure 4) is sent by the relay gNB; The second RRCReconfiguration message (step 5 of Figure 4) may contain configuration information provided by the relay gNB in the handover preparation acknowledgement; The RRCReconfigurationComplete message (step 7 of Figure 4) is sent to the relay gNB; The final relayed data (step 10 of Figure 4) are exchanged between the remote UE and the relay gNB.

Figure 5 contains an embedded assumption for the case where the target relay UE is initially in RRC_INACTIVE state. The signalling from step 10 onward assumes that the relay gNB shown in the figure is actually the gNB that serves the target relay UE after it resumes from RRC_INACTIVE. However, if the target relay UE was sent to RRC_INACTIVE and subsequently performed a cell reselection to a different cell, it may be served by a new gNB. In this case the "relay gNB" of Figure 5 can be considered as the anchor gNB of the target relay UE, and the anchor gNB cannot accept the handover that is requested by the remote gNB since the anchor gNB does not actually serve the target relay UE.

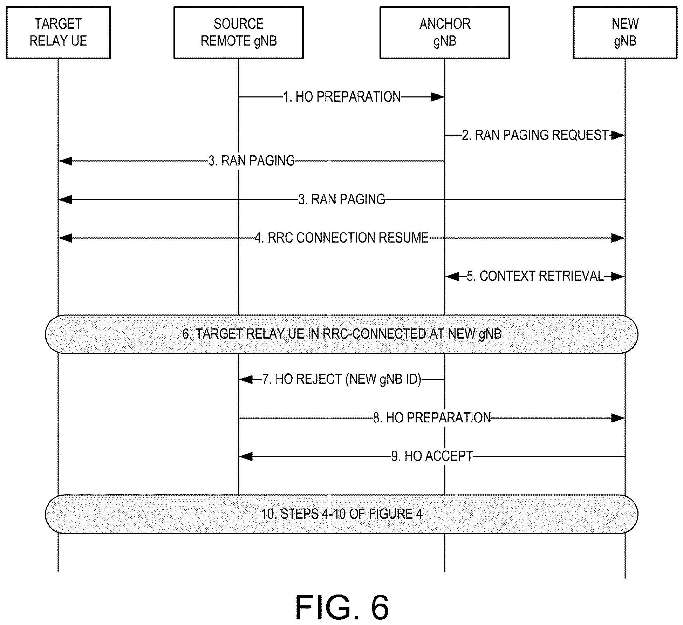

Figure 6 addresses this issue by showing a procedure for directing the handover procedure to the new gNB. Figure 6 illustrates a sequence flow of an inter-gNB indirect-to-indirect path switch operation with redirection of handover to a new cell after the target relay UE resumes. Figure 6 begins when the remote gNB requests a handover of the target relay UE to the anchor gNB (the equivalent of step 8 of Figure 5). In step 1, the remote gNB sends a handover preparation message to the anchor gNB. The anchor gNB, aware that the target relay UE is in RRC_INACTIVE, triggers a RAN paging procedure to locate the target relay UE and bring it to RRC_CONNECTED state. In step 2, the anchor gNB sends a RAN paging request to the new gNB. A similar RAN paging request may be sent to other gNBs in the same RAN notification area (RNA), which are not shown in Figure 6. In step 3, the gNBs involved in the RAN paging operation (for example, the anchor gNB and the new gNB, as well as potentially other gNBs in the same RNA) send a RAN paging message to the target relay UE over the air. In step 4, the target relay UE detects the RAN paging message and responds to resume its RRC connection at the new gNB. In step 5, the new gNB retrieves the target relay UE's RRC context from the anchor gNB. Step 5 may comprise multiple messages, such as a context transfer request and a context transfer. For example, the multiple messages may be XnAP messages.

In step 6, the target relay UE may safely be assumed to be in RRC_CONNECTED state at the new gNB. In step 7, the anchor gNB rejects the handover that was requested by the remote gNB, providing, along with the rejection indication, an indication of the identity of the new gNB. The indication of the identity of the new gNB may be included in a rejection message. The rejection message may be an XnAP message. In step 8, the remote gNB sends a handover preparation message to request a handover of the remote UE to the new gNB. In step 9, the new gNB, which serves the target relay UE, accepts the handover, potentially providing configuration information that can be used to configure the remote UE for communication with the target relay UE.

Step 10 subsumes steps 4-10 of Figure 4, with the following changes: The first RRCReconfiguration message (step 4 of Figure 4) is sent by the new gNB; The second RRCReconfiguration message (step 5 of Figure 4) may contain configuration information provided by the new gNB in the handover preparation acknowledgement; The RRCReconfigurationComplete message (step 7 of Figure 4) is sent to the new gNB; The final relayed data (step 10 of Figure 4) are exchanged between the remote UE and the new gNB.

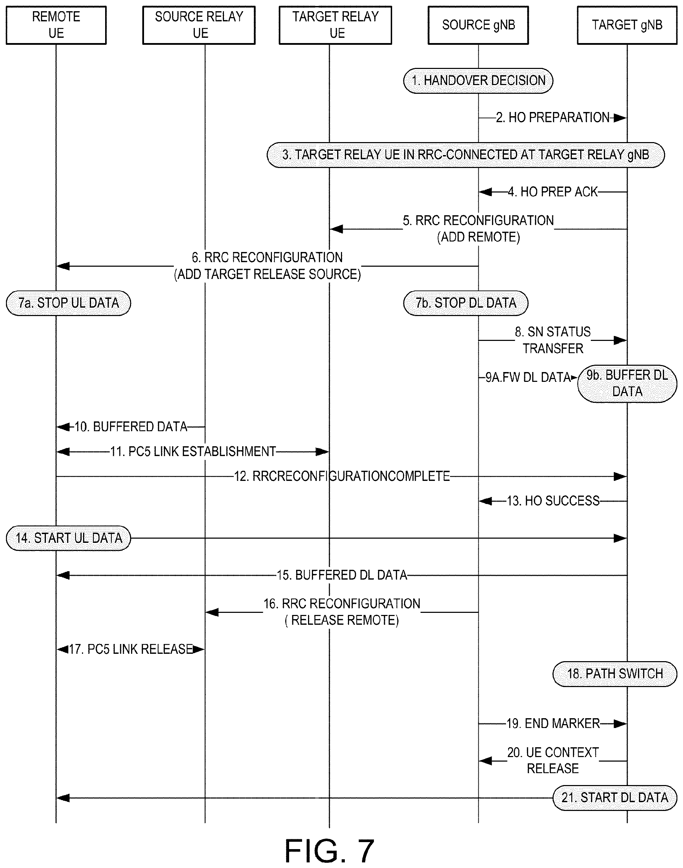

As discussed above, it is preferred that the path switch procedure should offer service continuity to the user, i.e., an existing service should be able to continue uninterrupted. Figure 7 shows the path switch procedure including the handling of user-plane data. Figure 7 illustrates a sequence flow of an inter-gNB indirect-to-indirect path switch operation with user-plane data handling in accordance with one novel aspect. In step 1 of Figure 7, the source gNB takes the decision to perform a handover (i.e., a path switch operation) of the remote UE from the source relay UE (located at the source gNB) to the target relay UE (located at the target gNB). This handover decision may be based upon implementation-specific criteria, but may take into account, for example, measurements reported by the remote UE, as previously discussed. In step 2, the source gNB sends a handover preparation message to prepare the target gNB to receive the context of the remote UE in handover. The handover preparation message may be an XnAP message. In step 3, the target gNB brings the target relay UE to RRC_CONNECTED, if necessary. It is noted that steps 2-4 may subsume the CN paging and/or RAN paging operations that were previously discussed, and the redirection of the handover to a new target gNB as shown in Figure 6.

In step 5, the target gNB sends to the target relay UE a first reconfiguration command (for example, a first RRCReconfiguration message) instructing the target relay UE to add the remote UE as a served remote. In step 6, the source gNB sends to the remote UE, via the source relay UE, a second reconfiguration command (for example, a second RRCReconfiguration message) instructing the remote UE to add the target relay UE as a serving relay and to remove the source relay UE as a serving relay. It is noted that steps 5 and 6 may take place in any order. In step 7a, the remote UE stops transmitting uplink (UL) data towards the source gNB via the source relay UE, and in step 7b, the source gNB stops transmitting downlink (DL) data towards the remote UE via the source relay UE. However, after steps 7a and 7b, UL data may continue to be generated and buffered at the remote UE, and DL data may continue to arrive from the CN at the source gNB. In step 8, the source gNB sends a sequence number (SN) status transfer message to the target gNB, conveying the status of the PDCP layer at the source gNB when over-the-air data transmission has been stopped; the SN status transfer message may be an XnAP message. The SN status may indicate one or more UL PDCP service data units (SDUs) that the remote UE will need to retransmit to the target gNB, via the target relay UE, when the path switch is completed. In step 9a, the source gNB forwards to the target gNB any DL data that arrives from the CN for the remote UE, and in step 9b, the target gNB buffers any such DL data. In step 10, the source relay UE delivers to the remote UE any remaining buffered DL data (for instance, data that arrived before the reconfiguration command in step 6, but that were not yet delivered successfully to the remote UE). In step 11, the remote UE and the target relay UE establish a PC5 link; this establishment may comprise a procedure for PC5-S link establishment and/or PC5-RRC connection establishment, which may subsume multiple messages whose details are not shown in the figure. It is noted that steps 8-11 may take place in a different order from the order shown in the figure; for instance, the source remote UE may deliver buffered data to the remote UE while the source gNB and the target gNB are carrying out steps 8 and 9a/9b. Steps 9a and 9b may take place on an ongoing basis for as long as DL data continue to arrive at the source gNB.

In step 12, the remote UE sends a handover complete message (for instance, an RRCReconfigurationComplete message) to the target gNB via the target relay UE, signifying that from the remote UE perspective the handover is complete. In step 13, the target gNB sends a handover success message to the source gNB; the handover success message may be an XnAP message. In step 14, the remote UE begins transmitting UL data, via the target relay UE, to the target gNB; this step includes delivering any UL data that were buffered at the remote UE after step 7a. In step 15, the target gNB transmits to the remote UE, via the target relay UE, any DL data that were buffered in step 9b. In step 16, the source gNB transmits to the source relay UE a third reconfiguration command (for instance, a third RRCReconfiguration message), indicating to the source relay UE to release the remote UE. In step 17, the remote UE and the source relay UE perform a PC5 link release procedure; this release may comprise a procedure for PC5-S link release and/or PC5-RRC connection release, which may subsume multiple messages whose details are not shown in the figure. It is noted that steps 16 and 17 may take place asynchronously with respect to steps 14 and 15. In step 18, the target gNB triggers a path switch operation with the CN, causing the user data path for the remote UE to be transferred from the source gNB to the target gNB; the path switch operation may take place in accordance with a legacy handover procedure. In step 19, the source gNB delivers to the target gNB an end marker, indicating that data forwarding from the source gNB to the target gNB has completed. In step 20, the target gNB sends to the source gNB a UE context release message; the UE context release message may be an XnAP message. In step 21, the target gNB begins transmitting DL data to the remote UE via the target relay UE, comprising any data that were received from the source gNB before step 19 as well as any new data arriving from the CN. It is noted that, as a result of the SN status transfer message in step 8, the target gNB is aware of what UL PDCP SDUs are missing (i.e., were not received by the source gNB) and can induce retransmission of the missing UL PDCP SDUs by legacy methods, such as sending a PDCP status report to the remote UE. Thus, the handover/path switch procedure can be lossless with respect to UL data sent by the remote UE. In the DL direction, all DL data delivered from the CN to the source gNB are either forwarded by the source relay UE (step 10) or forwarded to the target gNB (step 9a), buffered at the target gNB (step 9b), and sent to the remote UE (step 15), while all DL data delivered from the CN to the target gNB are sent to the remote UE (step 21). Thus, the handover/path switch procedure can be lossless with respect to DL data sent by the remote UE. Accordingly, the procedure may be seen to provide service continuity.

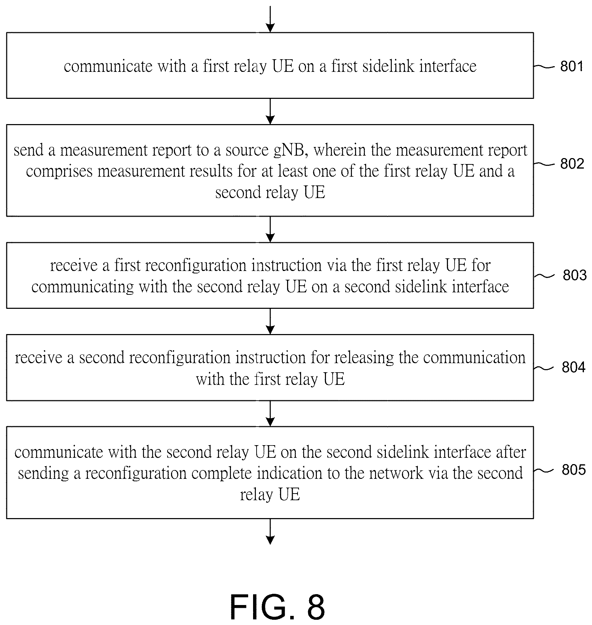

Figure 8 is a flow chart of a method of indirect-to-indirect path switch from a remote UE perspective in accordance with one novel aspect. In step 801, a remote UE communicates with a first relay UE on a first sidelink interface. In step 802, the remote UE sends a measurement report to a source gNB, wherein the measurement report comprises measurement results for at least one of the first relay UE and a second relay UE. In step 803, the remote UE receives a first reconfiguration instruction via the first relay UE for communicating with the second relay UE on a second sidelink interface. In step 804, the remote UE receives a second reconfiguration instruction for releasing the communication with the first relay UE. In step 805, the remote UE communicates with the second relay UE on the second sidelink interface after sending a reconfiguration complete indication to the network via the second relay UE.

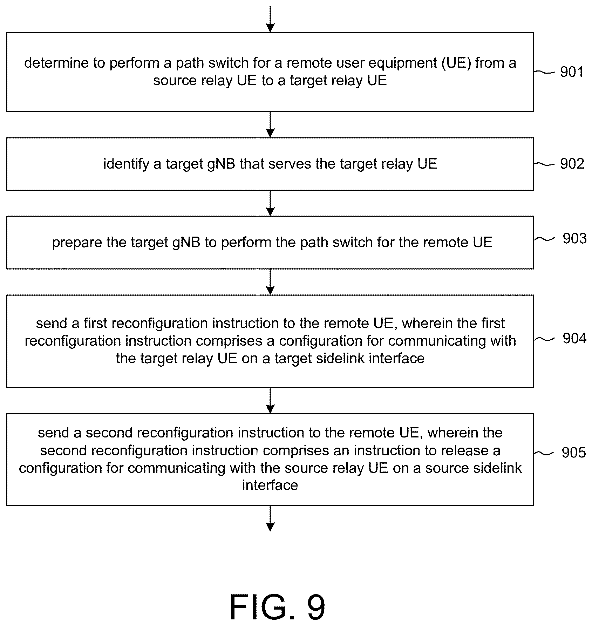

Figure 9 is a flow chart of a method of indirect-to-indirect path switch from a source gNB perspective in accordance with one novel aspect. In step 901, a source gNB determines to perform a path switch for a remote user equipment (UE) from a source relay UE to a target relay UE. In step 902, the source gNB identifies a target gNB that serves the target relay UE. In step 903, the source gNB prepares the target gNB to perform the path switch for the remote UE. In step 904, the source gNB sends a first reconfiguration instruction to the remote UE, wherein the first reconfiguration instruction comprises a configuration for communicating with the target relay UE on a target sidelink interface. In step 905, the source gNB sends a second reconfiguration instruction to the remote UE, wherein the second reconfiguration instruction comprises an instruction to release a configuration for communicating with the source relay UE on a source sidelink interface.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method performed by a remote user equipment, UE (101, 211), in a mobile communication network, comprising:
communicating (801) with a source relay UE on a first sidelink interface;
sending (802) a measurement report to a source gNB, wherein the measurement report comprises measurement results for at least one of the source relay UE and a target relay UE (802);
receiving (803) a first reconfiguration instruction via the source relay UE for communicating with the target relay UE on a second sidelink interface;
receiving (804) a second reconfiguration instruction for releasing the communication with the source relay UE; and
communicating (805) with the target relay UE on the second sidelink interface after sending a reconfiguration complete indication to the network via the target relay UE,
wherein the remote UE (101, 211) receives the first reconfiguration message from the source gNB that serves the source relay UE, and the remote UE (101, 211) sends the reconfiguration complete indication to a target gNB that serves the target relay UE;
wherein the source gNB and the target gNB are different gNBs;
**characterized in that** before the first reconfiguration instruction is sent by the source gNB, the target relay UE is in one of an RRC_CONNECTED state and an RRC_INACTIVE state of a radio resource control, RRC, protocol, and if the target relay UE is in the RRC_INACTIVE state, the target relay UE is brought, by the target gNB, in the RRC_CONNECTED state before the first reconfiguration instruction is sent by the source gNB.

2. The method of Claim 1, wherein the first reconfiguration and the second reconfiguration instructions are contained in a single reconfiguration message.

3. The method of any one of Claims 1 and 2, further comprising:
establishing a second link with the target relay UE on the second sidelink interface based on the first reconfiguration instruction; and
releasing a first link with the source relay UE on the first sidelink interface based on the second reconfiguration instruction.

4. The method of any one of Claims 1 to 3, wherein the measurement report is triggered based on an event that is conditioned on a measured quantity of signals from at least one of the source and the target relay UEs.

5. The method of Claim 4,
wherein the measured quantity is a measurement of signal strength or signal quality, and/or
wherein the event conditions comprise the measured quantity of signals from the source relay UE being below a first threshold, and/or
wherein the event conditions comprise the measured quantity of signals from the target relay UE being above a second threshold, and/or
wherein the event conditions comprise the measured quantity of signals from the target relay UE exceeding the measured quantity of signals from the source relay UE by a threshold.

6. A method performed by a source base station, gNB, comprising:
determining (901) to perform a path switch for a remote user equipment, UE (101, 211), from a source relay UE to a target relay UE, wherein the source gNB serves the source relay UE;
identifying (902) a target gNB that serves the target relay UE;
preparing (903) the target gNB for performing the path switch for the remote UE (101, 211);
sending (904) a first reconfiguration instruction to the remote UE (101, 211), wherein the first reconfiguration instruction comprises a configuration for communicating with the target relay UE on a second sidelink interface; and
sending (905) a second reconfiguration instruction to the remote UE (101, 211), wherein the second reconfiguration instruction comprises an instruction to release a configuration for communicating with the source relay UE on a first sidelink interface;
wherein the source gNB and the target gNB are different gNBs;
**characterized in that** before the first reconfiguration instruction is sent by the source gNB, the target relay UE is in one of an RRC_CONNECTED state and an RRC_INACTIVE state of a radio resource control, RRC, protocol, and if the target relay UE is in the RRC_INACTIVE state, the target relay UE is brought, by the target gNB, in the RRC_CONNECTED state before the first reconfiguration instruction is sent by the source gNB.

7. The method of Claim 6,
wherein the first reconfiguration and the second reconfiguration instructions are contained in a single reconfiguration message.

8. The method of any one of Claim 6 or 7,
further comprising:
sending, prior to the sending of the first reconfiguration instruction, a paging message to the target relay UE to transition to the RRC_CONNECTED state, and/or
further comprising:
sending, prior to the sending of the first reconfiguration instruction, a third reconfiguration instruction to the target relay UE for communicating with the remote UE (101, 211) on the second sidelink interface.

9. The method of any one of Claims 6 to 8, further comprising:
sending, subsequent to the sending of the second reconfiguration instruction, a fourth reconfiguration instruction to the source relay UE for releasing a configuration for communication with the remote UE (101, 211) on the first sidelink interface.

10. The method of any one of Claims 6 to 9, further comprising:
sending, to an access and mobility function, AMF, a message requesting an identity of the target gNB;
receiving, from the AMF, a message indicating the identity of the target gNB; and
sending, to the target gNB, a handover preparation message that comprises a request to connect the remote UE (101, 211) with the target relay UE.

11. The method of any one of Claims 6 to 9, further comprising:
sending, to an access and mobility function, AMF, a message requesting the identity of a third gNB;
receiving, from the AMF, a message indicating the identity of the third gNB;
sending, to the third gNB, a first handover preparation message comprising a request to connect the remote UE (101, 211) with the target relay UE;
receiving, from the third gNB, a handover reject message containing an identity of the target gNB; and
sending, to the target gNB, a second handover preparation message comprising a request to connect the remote UE (101, 211) with the target relay UE.

12. A remote user equipment, UE (101, 211), in a mobile communication network, comprising:
a sidelink interface that communicates with a source relay UE;
a measurement circuit that provides a measurement report to a source gNB, wherein the measurement report comprises measurement results for at least one of the source relay UE and a target relay UE;
a receiver that receives a first reconfiguration instruction via the source relay UE for communicating with the target relay UE on a second sidelink interface, wherein the receiver also receives a second reconfiguration instruction for releasing the communication with the source relay UE; and
a transmitter that sends a reconfiguration complete indication to the network via the target relay UE, wherein the UE communicates with the target relay UE on the second sidelink interface,
wherein the remote UE (101, 211) receives the first reconfiguration message from the source gNB that serves the source relay UE, and the remote UE (101, 211) sends the reconfiguration complete indication to a target gNB that serves the target relay UE;
wherein the source gNB and the target gNB are different gNBs;
**characterized in that** before the first reconfiguration instruction is sent by the source gNB, the target relay UE is in one of an RRC_CONNECTED state and an RRC_INACTIVE state of a radio resource control, RRC, protocol, and if the target relay UE is in the RRC_INACTIVE state, the target relay UE is brought, by the target gNB, in the RRC_CONNECTED state before the first reconfiguration instruction is sent by the source gNB.

13. The UE of Claim 12, wherein the first reconfiguration and the second reconfiguration instructions are contained in a single reconfiguration message.

## Patentansprüche

1. Verfahren, das von einem entfernten Benutzergerät, UE (101, 211), in einem Mobilkommunikationsnetzwerk durchgeführt wird, umfassend:
Kommunizieren (801) mit einem Quell-Relais-UE auf einer ersten Sidelink-Schnittstelle;
Senden (802) eines Messberichts an einen Quell-gNB, wobei der Messbericht Messergebnisse für mindestens eines von dem Quell-Relais-UE und einem Ziel-Relais-UE (802) umfasst;
Empfangen (803) einer ersten Rekonfigurationsanweisung über das Quell-Relais-UE zum Kommunizieren mit dem Ziel-Relais-UE auf einer zweiten Sidelink-Schnittstelle;
Empfangen (804) einer zweiten Rekonfigurationsanweisung zum Freigeben der Kommunikation mit dem Quell-Relais-UE; und
Kommunizieren (805) mit dem Ziel-Relais-UE auf der zweiten Sidelink-Schnittstelle nach dem Senden einer Rekonfigurationsabschlussanzeige an das Netzwerk über das Ziel-Relais-UE,
wobei das entfernte UE (101, 211) die erste Rekonfigurationsnachricht von dem Quell-gNB empfängt, der das Quell-Relais-UE bedient, und das entfernte UE (101, 211) die Rekonfigurationsabschlussanzeige an einen Ziel-gNB sendet, der das Ziel-Relais-UE bedient;
wobei der Quell-gNB und der Ziel-gNB unterschiedliche gNBs sind;
**dadurch gekennzeichnet, dass**, bevor die erste Rekonfigurationsanweisung durch den Quell-gNB gesendet wird, sich das Ziel-Relais-UE in einem von einem RRC_CONNECTED-Zustand und einem RRC_INACTIVE-Zustand eines Funkressourcensteuerung, RRC, -Protokolls befindet, und wenn sich das Ziel-Relais-UE in dem RRC_INACTIVE-Zustand befindet, das Ziel-Relais-UE durch den Ziel-gNB in den RRC_CONNECTED-Zustand gebracht wird, bevor die erste Rekonfigurationsanweisung durch den Quell-gNB gesendet wird.

2. Verfahren nach Anspruch 1, wobei die erste Rekonfigurationsanweisung und die zweite Rekonfigurationsanweisung in einer einzigen Rekonfigurationsnachricht enthalten sind.

3. Verfahren nach einem der Ansprüche 1 und 2, ferner umfassend:
Herstellen einer zweiten Verbindung mit dem Ziel-Relais-UE auf der zweiten Sidelink-Schnittstelle basierend auf der ersten Rekonfigurationsanweisung; und
Freigeben einer ersten Verbindung mit dem Quell-Relais-UE auf der ersten Sidelink-Schnittstelle basierend auf der zweiten Rekonfigurationsanweisung.

4. Verfahren nach einem der Ansprüche 1 bis 3, wobei der Messbericht basierend auf einem Ereignis ausgelöst wird, das von einer gemessenen Menge von Signalen von mindestens einem von dem Quell-Relais-UE und dem Ziel-Relais-UE abhängig ist.

5. Verfahren nach Anspruch 4,
wobei die gemessene Menge eine Messung der Signalstärke oder Signalqualität ist, und/oder
wobei die Ereignisbedingungen umfassen, dass die gemessene Menge von Signalen von dem Quell-Relais-UE unter einem ersten Schwellenwert liegt, und/oder
wobei die Ereignisbedingungen umfassen, dass die gemessene Menge von Signalen von dem Ziel-Relais-UE über einem zweiten Schwellenwert liegt, und/oder
wobei die Ereignisbedingungen umfassen, dass die gemessene Menge von Signalen von dem Ziel-Relais-UE die gemessene Menge von Signalen von dem Quell-Relais-UE um einen Schwellenwert überschreitet.

6. Verfahren, das von einer Quell- Basisstation, gNB, durchgeführt wird, umfassend:
Bestimmen (901), eine Pfadumschaltung für ein entferntes Benutzergerät, UE (101, 211), von einem Quell-Relais-UE zu einem Ziel-Relais-UE durchzuführen, wobei der Quell-gNB das Quell-Relais-UE bedient;
Identifizieren (902) eines Ziel-gNB, der das Ziel-Relais-UE bedient;
Vorbereiten (903) des Ziel-gNB zum Durchführen der Pfadumschaltung für das entfernte UE (101, 211);
Senden (904) einer ersten Rekonfigurationsanweisung an das entfernte UE (101, 211), wobei die erste Rekonfigurationsanweisung eine Konfiguration zum Kommunizieren mit dem Ziel-Relais-UE auf einer zweiten Sidelink-Schnittstelle umfasst; und
Senden (905) einer zweiten Rekonfigurationsanweisung an das entfernte UE (101, 211), wobei die zweite Rekonfigurationsanweisung eine Anweisung zum Freigeben einer Konfiguration zum Kommunizieren mit dem Quell-Relais-UE auf einer ersten Sidelink-Schnittstelle umfasst;
wobei der Quell-gNB und der Ziel-gNB unterschiedliche gNBs sind;
**dadurch gekennzeichnet, dass**, bevor die erste Rekonfigurationsanweisung durch den Quell-gNB gesendet wird, sich das Ziel-Relais-UE in einem von einem RRC_CONNECTED-Zustand und einem RRC_INACTIVE-Zustand eines Funkressourcensteuerung, RRC, -Protokolls befindet, und wenn sich das Ziel-Relais-UE in dem RRC_INACTIVE-Zustand befindet, das Ziel-Relais-UE durch den Ziel-gNB in den RRC_CONNECTED-Zustand gebracht wird, bevor die erste Rekonfigurationsanweisung durch den Quell-gNB gesendet wird.

7. Verfahren nach Anspruch 6,
wobei die erste Rekonfigurationsanweisung und die zweite Rekonfigurationsanweisung in einer einzigen Rekonfigurationsnachricht enthalten sind.

8. Verfahren nach einem der Ansprüche 6 oder 7,
ferner umfassend:
Senden, vor dem Senden der ersten Rekonfigurationsanweisung, einer Paging-Nachricht an das Ziel-Relais-UE, um in den RRC_CONNECTED-Zustand überzugehen, und/oder
ferner umfassend:
Senden, vor dem Senden der ersten Rekonfigurationsanweisung, einer dritten Rekonfigurationsanweisung an das Ziel-Relais-UE zum Kommunizieren mit dem entfernten UE (101, 211) auf der zweiten Sidelink-Schnittstelle.

9. Verfahren nach einem der Ansprüche 6 bis 8, ferner umfassend:
Senden, nach dem Senden der zweiten Rekonfigurationsanweisung, einer vierten Rekonfigurationsanweisung an das Quell-Relais-UE zum Freigeben einer Konfiguration zur Kommunikation mit dem entfernten UE (101, 211) auf der ersten Sidelink-Schnittstelle.

10. Verfahren nach einem der Ansprüche 6 bis 9, ferner umfassend:
Senden, an eine Zugangs-und-Mobilitätsfunktion, AMF, einer Nachricht, die eine Identität des Ziel-gNB anfordert;
Empfangen, von der AMF, einer Nachricht, die die Identität des Ziel-gNB anzeigt; und
Senden, an den Ziel-gNB, einer Übergabevorbereitungsnachricht, die eine Anforderung zum Verbinden des entfernten UE (101, 211) mit dem Ziel-Relais-UE umfasst.

11. Verfahren nach einem der Ansprüche 6 bis 9, ferner umfassend:
Senden, an eine Zugangs-und-Mobilitätsfunktion, AMF, einer Nachricht, die die Identität eines dritten gNB anfordert;
Empfangen, von der AMF, einer Nachricht, die die Identität des dritten gNB anzeigt;
Senden, an den dritten gNB, einer ersten Übergabevorbereitungsnachricht, die eine Anforderung zum Verbinden des entfernten UE (101, 211) mit dem Ziel-Relais-UE umfasst;
Empfangen, von dem dritten gNB, einer Übergabezurückweisungsnachricht, die eine Identität des Ziel-gNB enthält; und
Senden, an den Ziel-gNB, einer zweiten Übergabevorbereitungsnachricht, die eine Anforderung zum Verbinden des entfernten UE (101, 211) mit dem Ziel-Relais-UE umfasst.

12. Entferntes Benutzergerät, UE (101, 211), in einem Mobilkommunikationsnetzwerk, umfassend:
eine Sidelink-Schnittstelle, die mit einem Quell-Relais-UE kommuniziert;
eine Messschaltung, die einen Messbericht an einen Quell-gNB bereitstellt, wobei der Messbericht Messergebnisse für mindestens eines von dem Quell-Relais-UE und einem Ziel-Relais-UE umfasst;
einen Empfänger, der eine erste Rekonfigurationsanweisung über das Quell-Relais-UE zum Kommunizieren mit dem Ziel-Relais-UE auf einer zweiten Sidelink-Schnittstelle empfängt, wobei der Empfänger auch eine zweite Rekonfigurationsanweisung zum Freigeben der Kommunikation mit dem Quell-Relais-UE empfängt; und
einen Sender, der eine Rekonfigurationsabschlussanzeige an das Netzwerk über das Ziel-Relais-UE sendet, wobei das UE mit dem Ziel-Relais-UE auf der zweiten Sidelink-Schnittstelle kommuniziert,
wobei das entfernte UE (101, 211) die erste Rekonfigurationsnachricht von dem Quell-gNB empfängt, der das Quell-Relais-UE bedient, und das entfernte UE (101, 211) die Rekonfigurationsabschlussanzeige an einen Ziel-gNB sendet, der das Ziel-Relais-UE bedient;
wobei der Quell-gNB und der Ziel-gNB unterschiedliche gNBs sind;
**dadurch gekennzeichnet, dass**, bevor die erste Rekonfigurationsanweisung durch den Quell-gNB gesendet wird, sich das Ziel-Relais-UE in einem von einem RRC_CONNECTED-Zustand und einem RRC_INACTIVE-Zustand eines Funkressourcensteuerung, RRC, -Protokolls befindet, und wenn sich das Ziel-Relais-UE in dem RRC_INACTIVE-Zustand befindet, das Ziel-Relais-UE durch den Ziel-gNB in den RRC_CONNECTED-Zustand gebracht wird, bevor die erste Rekonfigurationsanweisung durch den Quell-gNB gesendet wird.

13. UE nach Anspruch 12, wobei die erste Rekonfigurationsanweisung und die zweite Rekonfigurationsanweisung in einer einzigen Rekonfigurationsnachricht enthalten sind.

## Revendications

1. Procédé réalisé par un équipement utilisateur distant, UE (101, 211), dans un réseau de communication mobile, comprenant :
la communication (801) avec un UE relais source sur une première interface de liaison latérale ;
l'envoi (802) d'un rapport de mesure à un gNB source, dans lequel le rapport de mesure comprend des résultats de mesure pour au moins l'un de l'UE relais source et d'un UE relais cible (802) ;
la réception (803) d'une première instruction de reconfiguration via l'UE relais source pour communiquer avec l'UE relais cible sur une seconde interface de liaison latérale ;
la réception (804) d'une seconde instruction de reconfiguration pour libérer la communication avec l'UE relais source ; et
la communication (805) avec l'UE relais cible sur la seconde interface de liaison latérale après l'envoi d'une indication de reconfiguration complète au réseau via l'UE relais cible,
dans lequel l'UE distant (101, 211) reçoit le premier message de reconfiguration du gNB source qui dessert l'UE relais source, et l'UE distant (101, 211) envoie l'indication de reconfiguration complète à un gNB cible qui dessert l'UE relais cible ;
dans lequel le gNB source et le gNB cible sont des gNB différents ;
**caractérisé en ce que**, avant que la première instruction de reconfiguration ne soit envoyée par le gNB source, l'UE relais cible est dans l'un d'un état RRC_CONNECTED et d'un état RRC_INACTIVE d'un protocole de commande de ressources radio, RRC, et si l'UE relais cible est dans l'état RRC_INACTIVE, l'UE relais cible est amené, par le gNB cible, dans l'état RRC_CONNECTED avant que la première instruction de reconfiguration ne soit envoyée par le gNB source.

2. Procédé selon la revendication 1, dans lequel la première instruction de reconfiguration et la seconde instruction de reconfiguration sont contenues dans un message de reconfiguration unique.

3. Procédé selon l'une quelconque des revendications 1 et 2, comprenant en outre :
l'établissement d'une seconde liaison avec l'UE relais cible sur la seconde interface de liaison latérale sur la base de la première instruction de reconfiguration ; et
la libération d'une première liaison avec l'UE relais source sur la première interface de liaison latérale sur la base de la seconde instruction de reconfiguration.

4. Procédé selon l'une quelconque des revendications 1 à 3, dans lequel le rapport de mesure est déclenché sur la base d'un événement qui est conditionné à une quantité mesurée de signaux provenant d'au moins l'un des UE relais source et cible.

5. Procédé selon la revendication 4,
dans lequel la quantité mesurée est une mesure d'intensité de signal ou de qualité de signal, et/ou
dans lequel les conditions d'événement comprennent la quantité mesurée de signaux provenant de l'UE relais source qui est inférieure à un premier seuil, et/ou
dans lequel les conditions d'événement comprennent la quantité mesurée de signaux provenant de l'UE relais cible qui est supérieure à un second seuil, et/ou
dans lequel les conditions d'événement comprennent la quantité mesurée de signaux provenant de l'UE relais cible dépassant la quantité mesurée de signaux provenant de l'UE relais source d'un seuil.

6. Procédé réalisé par une station de base source, gNB, comprenant :
la détermination (901) de réaliser une commutation de trajet pour un équipement utilisateur distant, UE (101, 211), d'un UE relais source à un UE relais cible, dans lequel la gNB source dessert l'UE relais source ;
l'identification (902) d'un gNB cible qui dessert l'UE relais cible ;
la préparation (903) du gNB cible pour réaliser la commutation de trajet pour l'UE distant (101, 211) ;
l'envoi (904) d'une première instruction de reconfiguration à l'UE distant (101, 211), dans lequel la première instruction de reconfiguration comprend une configuration pour communiquer avec l'UE relais cible sur une seconde interface de liaison latérale ; et
l'envoi (905) d'une seconde instruction de reconfiguration à l'UE distant (101, 211), dans lequel la seconde instruction de reconfiguration comprend une instruction pour libérer une configuration pour communiquer avec l'UE relais source sur une première interface de liaison latérale ;
dans lequel le gNB source et le gNB cible sont des gNB différents ;
**caractérisé en ce que**, avant que la première instruction de reconfiguration ne soit envoyée par le gNB source, l'UE relais cible est dans l'un d'un état RRC_CONNECTED et d'un état RRC_INACTIVE d'un protocole de commande de ressources radio, RRC, et si l'UE relais cible est dans l'état RRC_INACTIVE, l'UE relais cible est amené, par le gNB cible, dans l'état RRC_CONNECTED avant que la première instruction de reconfiguration ne soit envoyée par le gNB source.

7. Procédé selon la revendication 6,
dans lequel la première instruction de reconfiguration et la seconde instruction de reconfiguration sont contenues dans un message de reconfiguration unique.

8. Procédé selon l'une quelconque des revendications 6 ou 7,
comprenant en outre :
l'envoi, avant l'envoi de la première instruction de reconfiguration, d'un message de radiomessagerie à l'UE relais cible pour passer à l'état RRC_CONNECTED, et/ou
comprenant en outre :
l'envoi, avant l'envoi de la première instruction de reconfiguration, d'une troisième instruction de reconfiguration à l'UE relais cible pour communiquer avec l'UE distant (101, 211) sur la seconde interface de liaison latérale.

9. Procédé selon l'une quelconque des revendications 6 à 8, comprenant en outre :
l'envoi, après l'envoi de la seconde instruction de reconfiguration, d'une quatrième instruction de reconfiguration à l'UE relais source pour libérer une configuration pour communiquer avec l'UE distant (101, 211) sur la première interface de liaison latérale.

10. Procédé selon l'une quelconque des revendications 6 à 9, comprenant en outre :
l'envoi, à une fonction d'accès et de mobilité, AMF, d'un message demandant une identité du gNB cible ;
la réception, depuis l'AMF, d'un message indiquant l'identité du gNB cible ; et
l'envoi, au gNB cible, d'un message de préparation de transfert intercellulaire qui comprend une demande pour connecter l'UE distant (101, 211) à l'UE relais cible.

11. Procédé selon l'une quelconque des revendications 6 à 9, comprenant en outre :
l'envoi, à une fonction d'accès et de mobilité, AMF, d'un message demandant l'identité d'un troisième gNB ;
la réception, depuis l'AMF, d'un message indiquant l'identité du troisième gNB ;
l'envoi, au troisième gNB, d'un premier message de préparation de transfert intercellulaire comprenant une demande pour connecter l'UE distant (101, 211) à l'UE relais cible ;
la réception, depuis le troisième gNB, d'un message de rejet de transfert intercellulaire contenant une identité du gNB cible ; et
l'envoi, au gNB cible, d'un second message de préparation de transfert intercellulaire comprenant une demande pour connecter l'UE distant (101, 211) à l'UE relais cible.

12. Équipement utilisateur distant, UE (101, 211), dans un réseau de communication mobile, comprenant :
une interface de liaison latérale qui communique avec un UE relais source ;
un circuit de mesure qui fournit un rapport de mesure à un gNB source, dans lequel le rapport de mesure comprend des résultats de mesure pour au moins l'un de l'UE relais source et d'un UE relais cible ;
un récepteur qui reçoit une première instruction de reconfiguration via l'UE relais source pour communiquer avec l'UE relais cible sur une seconde interface de liaison latérale, dans lequel le récepteur reçoit également une seconde instruction de reconfiguration pour libérer la communication avec l'UE relais source ; et
un émetteur qui envoie une indication de reconfiguration complète au réseau via l'UE relais cible, dans lequel l'UE communique avec l'UE relais cible sur la seconde interface de liaison latérale,
dans lequel l'UE distant (101, 211) reçoit le premier message de reconfiguration du gNB source qui dessert l'UE relais source, et l'UE distant (101, 211) envoie l'indication de reconfiguration complète à un gNB cible qui dessert l'UE relais cible ;
dans lequel le gNB source et le gNB cible sont des gNB différents ;
**caractérisé en ce que**, avant que la première instruction de reconfiguration ne soit envoyée par le gNB source, l'UE relais cible est dans l'un d'un état RRC_CONNECTED et d'un état RRC_INACTIVE d'un protocole de commande de ressources radio, RRC, et si l'UE relais cible est dans l'état RRC_INACTIVE, l'UE relais cible est amené, par le gNB cible, dans l'état RRC_CONNECTED avant que la première instruction de reconfiguration ne soit envoyée par le gNB source.

13. UE selon la revendication 12, dans lequel la première instruction de reconfiguration et la seconde instruction de reconfiguration sont contenues dans un message de reconfiguration unique.
